# EUROPEAN PATENT SPECIFICATION

(11) **EP 2 903 311 B1**
(45) Date of publication and mention of the grant of the patent: **19.10.2016**
(21) Application number: 14305120.9
(22) Date of filing: 30.01.2014
(51) Int. Cl.: H04W 4/08

(54) **GROUP COMMUNICATION**
GRUPPENKOMMUNIKATION
COMMUNICATION DE GROUPE

(43) Date of publication of application: 05.08.2015
(73) Proprietor: ALCATEL LUCENT, 92100 Boulogne-Billancourt (FR)
(72) Inventor: Worrall, Chandrika, Swindon, Wiltshire SN5 7DJ (GB)
(74) Representative: Sarup, David Alexander

(56) References cited:
- US-A1- 2006 176 838
- US-A1- 2012 172 028
- US-A1- 2013 170 450
- "3rd Generation Partnership Project; Technical Specification Group Services and System Aspects; Study on architecture enhancements to support Group Communication System Enablers for LTE (GCSE_LTE) (Release 12)", 3GPP DRAFT; 23768-110-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 January 2014 (2014-01-27), XP050764401, Retrieved from the Internet: URL:http://www.3gpp.org/ftp/tsg_sa/WG2_Arc h/Latest_SA2_Specs/Latest_draft_S2_Specs/ [retrieved on 2014-01-27]

## Description

### FIELD OF THE INVENTION

Group communication wireless communication network node methods, network nodes and computer program products operable to perform those methods.

### BACKGROUND

Wireless telecommunication networks are known. In a cellular system, radio coverage is provided to network connectible devices in geographical areas known as cells. A network access node is located in each cell and provides radio coverage to the network connectible devices.

Information and data transmitted by a network access node to user equipment or other network connectible devices typically occurs on channels of radio carriers known as downlink carriers. Information and data transmitted by user equipment and network connectible devices to network access nodes occurs on uplink data channels of radio carriers known as uplink carriers.

Services such as, for example, multimedia broadcast multicast services (MBMS) may be provided to network connectible devices. In particular, network connectible devices which are capable of receiving such services may indicate to the network which services may be of interest. The network connectible device may be operable to receive services of interest on carriers which are indicated as carrying those services of interest.

As multiple MBMS may be available to network connectible devices, it may become advantageous to consider how those services and network connectible devices are handled by a network.

US2006/0176838 describes a point-to-multipoint communication method. According to the method, a first message comprising a first point-to-multipoint service group identifier is received through a control channel. The first identifier is associated with a first plurality of point-to-multipoint service for a predetermined area. A second message, comprising a list of point-to-multipoint service identifiers associated with the first point-to-multipoint service group identifier is received through the control channel.

The method comprises: processing, according to control information received through the control channel, whether the list of point-to-multipoint service identifiers comprises at least one service that a user equipment is subscribed to. The control channel may comprise a point-to-multipoint control channel. The first message may comprise a list of point to multipoint services associated with modified control information.

Although MBMS approaches can offer new modes of operation within a wireless communication network, unexpected consequences can occur.

### SUMMARY

Accordingly, a first aspect provides a wireless communication network group communication method according to claim 1.

The first aspect recognises that multimedia broadcast multicast services (MBMS) procedures can offer a suitable approach for support of group communication and a means to use radio resource efficiently. In particular, MBMS procedures may be suited to group communication for, for example, public safety applications such as police or security communications. It will be appreciated that group communication can require transmission of the same information to a number of receiving group members.

Group communication procedures may need to satisfy certain service requirements. For example, if the group communication were being provided for the police, members of that police group may be offered multiple services using multimedia broadcast multicast service techniques. Those multiple services may comprise different media: for example, voice, video and/or data services.

The first aspect recognises that MBMS are typically such that each available media service is identified by a temporary mobile group identity (TMGI). Traffic belonging to a TMGI is mapped to an MBMS logical channel for transmission by radio access nodes to network connectible devices over a radio interface.

It will be appreciated that a large number of TMGIs are available, since TMGI is a 30 bit identifier, but MBMS logical channel identity space is limited.

The first aspect recognises that if multiple services are to be supported in relation to a user group (for example, a police user group), multiple logical channels may be required to support that user group. That is to say, multiple logical channels may be allocated to one user group and consequently such an arrangement can limit the number of user groups which can be supported by a network.

The first aspect recognises that in a real-world system there may be a requirement to support a large number of groups or that there may be a number of user groups in communication within the network operating at the same time. The first aspect recognises that it can be useful to be able to multiplex MBMS associated with the same user group efficiently to one or more MBMS logical channels.

It is possible to map multiple MBMS to the same logical channel for data delivery. The mapping of those multiple MBMS may be performed based on quality of service (QoS) requirements associated with each MBMS. However, by only looking at such quality of service requirements, network connectible devices such as user equipment belonging to different user groups can end up monitoring the same logical channel for service, even though MBMS for only one group can be scheduled at a time. Such an arrangement is therefore likely to be wasteful of network connectible device power and available MBMS logical channels.

The first aspect recognises that multiplexing of MBMS which belong to the same user group onto the same logical channel may result in an improvement in overall power consumption at a network connectible device, but may only be performed if there is some way of indicating and grouping services belonging to a user group. Aspects recognise that appropriate multiplexing may improve reliability of MBMS transmissions and that intelligent service grouping and transmission can enhance radio resource scheduling if MBMS relating to a user group are known.

Aspects and embodiments provide a method for allowing the multiplexing of multiple MBMS belonging to the same user group on to the same logical channel, such that more efficient scheduling can be enabled at a radio interface as a result of efficient service identification for a user group.

Group communication performed in accordance with the first aspect may comprise MBMS group communication. The wireless communication network may be operable to support group communication with a plurality of user groups. An end user may be a member of more than one user group. A method according to the first aspect may comprise: associating a set of group service identifiers with a user group. Accordingly, the set may comprise one or more group service identifiers. A method according to the first aspect may comprise: communicating an indication of the set of group service identifiers to another node in the communication network. Accordingly, a control node of a network may decide a set of group service identifiers to be used in support of a user group and that decision may be communicated to other nodes in a network as appropriate. A method according to the first aspect may comprise: determining a group service is to be transmitted to the user group; and allocating one of the set of group service identifiers with the group service. Accordingly, when a service intended for a user group is identified or initiated, an appropriate group identifier can be associated with that service to indicate that it is a service intended for a particular user group.

Members of the set of group service identifiers associated with the user group comprise: group service identifiers forming a subtree of a binary tree comprising all available group service identifiers. Typically group service identifiers are indicated in a message comprising a series of bits. It will be appreciated that all possible group service identifiers might be considered to be leaves on a binary tree and that one efficient means to group available group service identifiers into one or more sets might be to allocate based on subtrees of the binary tree comprising all available group service identifiers.

The indication of the set of group service identifiers comprises a root node of the subtree. Accordingly, the signalling required to identify a set of group identifiers may be minimised by identifying a root node of a subtree of which all the leaves are in the set of interest.

In one embodiment, the group service identifier comprises: a temporary mobile group identity (TMGIs). TMGI can be used or interpreted as the identification of a service within the transport network.

In one embodiment, the group communication comprises: MBMS communication. Accordingly, many users, for example, all members of a user group, may be operable to receive a multicast message transmitted by a network.

In one embodiment, the method further comprises: communicating the allocation of a group service identifier with the group service to said other node in the communication network. Accordingly, an application server, operating, for example, to generate a service for a user group, may be operable to inform other network nodes, for example, a multicast coordination entity (MCE) node, of the group service identifier associated with that service. Accordingly, the MCE can then use knowledge of a user group associated with a service when scheduling that service.

In one embodiment, the method further comprises: communicating operational parameters of the group service to the other node in the communication network. Accordingly, scheduling, multiplexing or allocation of a channel to a group service may be performed intelligently if a user group and operational parameters of each service are known. Such operational parameters may, for example, include quality of service (QoS), and/or an indication of a service type, for example data, voice, video forming the group service.

A second aspect provides a computer program product operable, when executed on a computer, to perform the method of the first aspect.

A third aspect provides a wireless communication network node configured for group communication according to claim 5.

In one embodiment, the network node comprises: an application server or a broadcast multimedia service centre.

Members of the set of group service identifiers associated with the user group comprise: group service identifiers forming a subtree of a binary tree comprising all available group service identifiers.

The indication of the set of group service identifiers comprises a root node of the subtree.

In one embodiment, the group service identifier comprises: a temporary mobile group identity (TMGI).

In one embodiment, the group communication comprises: MBMS communication.

In one embodiment, the communication logic is operable to communicate the allocation of a group service identifier with the group service to another node in the communication network.

In one embodiment, the communication logic is operable to communicate operational parameters of the group service to the other node in the communication network.

A fourth aspect provides a wireless communication network group communication scheduling method according to claim 6.

The fourth aspect recognises that it can be useful for a node in a network which is scheduling group communication to be aware of a user group in relation to a group service. Accordingly, intelligent scheduling and resource utilisation decisions may be made in respect of services in relation to a user group. For example, if a control node is aware that a plurality of group services are being transmitted to a user group, those group services may be allocated or multiplexed onto the same group communication channel. Such a control node may comprise a multicast coordination entity (MCE) and perform control operation in accordance with a method in accordance with the fourth aspect.

For example, an MCE may be informed of a set of group service identifiers to be associated with a user group by an application server. When the application server subsequently commences transmission of a group service and includes a group service identifier in initial setup messages, the MCE may be operable to identify a user group with which the group service is associated on the basis of the group service identifier.

Members of the set of group service identifiers associated with the user group comprise: group service identifiers forming a subtree of a binary tree comprising all available group service identifiers.

The indication of the set of group service identifiers comprises a root node of the subtree.

In one embodiment, the group service identifier comprises: a temporary mobile group identity (TMGI).

In one embodiment, the group communication comprises: MBMS communication.

In one embodiment, determining comprises: receiving an allocation of a group service identifier and matching the group service with a user group based on the indication of the set of group service identifiers associated with the user group.

In one embodiment, the group communication channel comprises an MBMS radio bearer.

In one embodiment, the method comprises multiplexing a plurality of group services associated with the user group onto an MBMS. radio bearer. Accordingly, it will be appreciated that establishment of an MBMS radio bearer (MRB) for delivery of a group service to user equipment may be performed in relation to a group service. MRB is typically identified by a logical channel identity (LCID). Each MBMS identified by a TMGI can be mapped to an MRB. Typically, more than one MBMS service (that is to say, more than one TMGI) can be mapped to the same LCID. That mapping can occur in accordance with the fourth aspect, provided that the group services are intended for the same user group.

In one embodiment, the method further comprises: receiving operational parameters of the group service. In one embodiment, the allocation of the group communication channel occurs in dependence upon operational parameters of the group service and the user group associated with the group service. Typically, more than one MBMS service (that is to say, more than one TMGI) can be mapped to the same LCID. That mapping can occur provided that the services require the same treatment; for example, scheduling or quality of service, in relation to delivery to users, and that the services are intended for the same user group.

A fifth aspect provides a computer program product operable, when executed on a computer, to perform the method of the fourth aspect.

A sixth aspect provides a scheduler according to claim 10.

In one embodiment, the network node comprises a multicast entity coordinator.

Members of the set of group service identifiers associated with the user group comprise: group service identifiers forming a subtree of a binary tree comprising all available group service identifiers.

The indication of the set of group service identifiers comprises a root node of the subtree.

In one embodiment, the group service identifier comprises: a temporary mobile group identity (TMGI).

In one embodiment, the group communication comprises: MBMS communication.

In one embodiment, the group service identification logic is operable to determine by receiving an allocation of a group service identifier and matching the group service with a user group based on said indication of the set of group service identifiers associated with the user group.

In one embodiment, the group communication channel comprises an MBMS radio bearer.

In one embodiment, the network node allocation logic is operable to multiplex a plurality of group services associated with the user group onto an MBMS radio bearer.

In one embodiment, the group service identification logic is operable to receive operational parameters of the group service.

In one embodiment, the network node allocation logic is operable to allocate the group communication channel in dependence upon operational parameters of the group service and the user group associated with the group service.

A seventh aspect provides a wireless communication network group communication method according to claim 11.

The seventh aspect recognises that a member of a user group needs to be aware of which channels to monitor for group communication intended to be received by that member. User equipment may receive dedicated signalling of group service identifier(s) associated with its user group so that it can perform the appropriate monitoring.

In one embodiment, the method further comprises receiving a security key associated with the user group. Accordingly, a member of a user group maybe given information to allow it to decode messages carried for the user group and transmitted using multicast techniques.

Members of the set of group service identifiers associated with the user group comprise: group service identifiers forming a subtree of a binary tree comprising all available group service identifiers.

The indication of the set of group service identifiers comprises a root node of the subtree.

In one embodiment, the group service identifier comprises: a temporary mobile group identity (TMGI).

In one embodiment, the group communication comprises: MBMS communication.

An eighth aspect provides a computer program product operable, when executed on a computer, to perform the method of the seventh aspect.

A ninth aspect provides a wireless communication network user equipment configured for group communication according to claim 12.

Members of the set of group service identifiers associated with the user group comprise: group service identifiers forming a subtree of a binary tree comprising all available group service identifiers.

The indication of the set of group service identifiers comprises a root node of the subtree.

In one embodiment, the group service identifier comprises: a temporary mobile group identity (TMGI).

In one embodiment, the group communication comprises: MBMS communication.

In one embodiment, the node comprises reception logic operable to receive a security key associated with the user group.

In one embodiment, the network node comprises user equipment.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically reference architecture for an evolved packet system using E-UTRAN;
Figure 2 illustrates schematically E-MBMS control-plane architecture; and
Figure 3 illustrates schematically a binary tree arrangement of TMGIs for group communication according to one arrangement.

### DESCRIPTION OF THE EMBODIMENTS

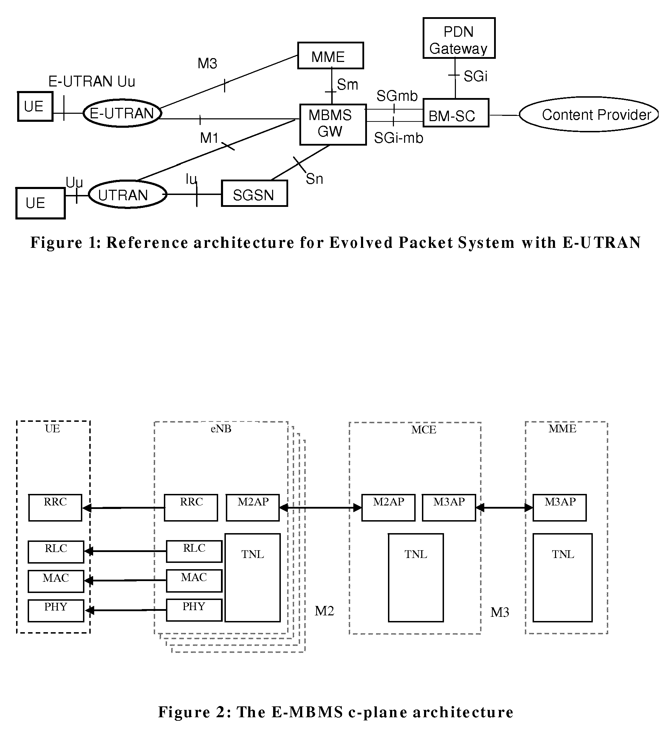

By way of background, Figure 1 illustrates schematically reference architecture for an evolved packet system with E-UTRAN. As can be seen from Figure 1, a content provider provides a broadcast multimedia service centre (BM-SC) with service data to be transmitted to members of a user group. The BM-SC typically performs encryption of the content to be routed to group users. The BM-SC provides an MBMS gateway with control and traffic signalling and the MBMS gateway is operable to provide traffic and control signalling to the E-UTRAN and mobility management entity (MME) respectively. When performing MBMS communication, the E-UTRAN includes a multi cast entity (MCE) coordinator.

Figure 2 illustrates schematically E-MBMS control plane architecture in more detail and includes an indication of the steps which occur at the mobility management entity (MME), the multi cast entity (MCE) coordinator and e-node B (eNB) and user equipment (UE).

There is no standardised method to inform a scheduler of which MBMS services belong to a particular user group involved in group communication procedures.

Some MBMS techniques allow a scheduler visibility of multiple services belonging to the same user group by using an OAM method. According to such a method, a group communication service enabler-application server (GCSE-AS) is operable to convey service information to a MCE (multi cell coordination entity) within a network where MBMS scheduling is performed. However, use of the OAM method is semi-static and for efficient support of multiple user group communication it is appropriate to have a more dynamic allocation method.

According to some techniques, an OAM-based method can be implemented in which a user is informed of which TMGIs (temporary mobile group identities) are to be monitored for a given user group. A user maybe informed of those TMGIs via application layer signalling over a unicast connection. Such a method can lead to a large signalling overhead which can be significant if considering a large number of TMGIs. Such an OAM method may result in a particularly high signalling overhead if it is to be used for multiple services mapping to the same logical channel.

In accordance with the architectures shown in Figures 1 and 2, a network operates such that each service to be transmitted using MBMS techniques is allocated a TMGI for identification. That allocation is performed by the BM-SC if the service is intended to be delivered using MBMS techniques. User equipment can be informed of the service and the allocated TMGI in a user service description (USD) message. That message may be delivered to the user equipment via the application or service layer.

TMGI can be used or interpreted as the identification of a service within the transport network. The broadcast multimedia service centre (BM-SC) is operable to inform the E-UTRAN of the quality of service of the required transport bearer for carrying a service in a "session start" message. That session start message is typically sent as part of E-UTRAN establishment of an MBMS radio bearer (MRB) for delivery of a service to user equipment. MRB is typically identified by a logical channel identity (LCID). Each MBMS identified by a TMGI can be mapped to an MRB.

Typically, more than one MBMS service (that is to say, more than one TMGI) can be mapped to the same LCID. That mapping can occur provided that the services require the same treatment; for example, scheduling or quality of service, in relation to delivery to users. Typically, there is no indication of whether the multiple TMGIs correspond in any other way to each other. That is to say, there is no indicator provided regarding whether those services having different TMGIs are being offered to the same user group.

Each service (each associated with a TMGI) is protected by encryption algorithms at the application layer. User equipment which are registered for a service can be provided with application layer encryption information on registration. Even if a user receives the data at the lower protocol layers, it is not possible to comprehend that information without application layer decryption. That is to say, if multiple services are delivered using the same MRB, only user equipment with application layer security keys registered to receive a service will actually be operable to receive that service. For other user equipment, decryption operation will fail. As a consequence, user equipment not having the necessary information consumes UE power unnecessarily. From the perspective of a user, information is provided regarding which TMGI values to monitor for its service in the user service description (USD). If multiple services are offered for the same group, multiple TMGIs are provided to the user equipment for monitoring.

Aspects and embodiments recognise that it is possible to intelligently identify services for group communication such that services intended for a user group can be efficiently mapped and transported using limited available MBMS resource.

### Overview

Before specific aspects and embodiments of the invention are described, first an overview will be provided.

Aspects and embodiments recognise a need to provide a method for prediction of TMGIs of services belonging to the same end user group. Aspects and embodiments may use hierarchical allocation of MBMS identifiers (TMGI, for example). Higher levels of the hierarchy can be used to identify TMGI belonging to the same user group. It will be appreciated that since a 30 bit identity is available in relation to TMGI in existing networks, there is sufficient TMGI space for performance of such a group allocation.

According to some aspects and embodiments, a user can be provided with an indication of TMGI at a high level of the hierarchy. In particular, aspects recognise that a group of service identifiers (TMGI) can be represented by a high level of the hierarchy and, as a result of that grouping, network signalling can be reduced.

Aspects recognise that a scheduler (for example, a multi cell coordination entity) can be informed of a high level hierarchy and, thus, the scheduler can be made aware of the services belonging to a particular group. Accordingly, grouping information can be transmitted implicitly by identification of a group hierarchy and multiplexing can occur in accordance with end user services indicated by membership of a particular group.

Aspects and embodiments recognise that existing MBMS procedures may be substantially reused or unchanged whilst implementing a new MBMS user group structure.

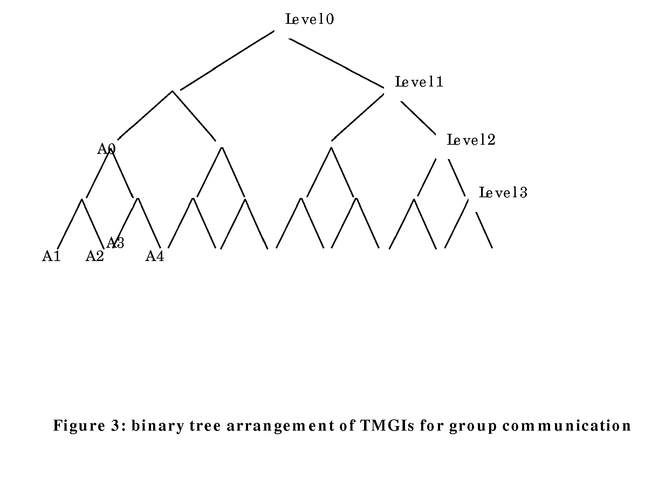

Figure 3 illustrates schematically a binary tree arrangement of TMGI (service identifiers) which can be used to implement group communication techniques in MBMS capable networks. Aspects and embodiments recognise that if an E-UTRAN can be made aware of which services are allowed to be offered within one user group, those services may be multiplexed onto the same MRB for delivery to users. Accordingly, aspects and embodiments are such that the multiplexing of services belonging to different user groups onto the same MRB can be avoided as appropriate.

Each MBMS can be identified by a TMGI. A given TMGI typically contains two parts: PLMN information and service ID information. The service ID is typically 3 octets in size. For a given PLMN there are 2²⁴ unique TMGI which can be used to identify different services. Since TMGI uses binary numbers, TMGI can be organised into a binary tree hierarchy, as shown in Figure 3. The lowest layer of the hierarchy corresponds to each individual TMGI.

In the example illustrated by Figure 3, A0 is used to represent the group of TMGI consisting of A1, A2, A3 and A4. In accordance with aspects and embodiments, services belonging to one user group for group communication using MBMS techniques can be allocated TMGI in accordance with the group hierarchy. In the example shown, four services can be offered in support of group communication for a given user group. Each service can be allocated one of the TMGIs from the set A1, A2, A3 and A4. The group service information can be delivered to user equipment by means of the delivery of a code A0. Assuming that all services for corresponding group communications are encrypted using the same security key for the group communication, the corresponding security keys and group code A0 can be communicated to user equipment upon group registration. From that information, user equipment may be operable to derive the corresponding TMGI (A1, A2, A3, A4) in relation to services offered to that particular group (A0). As a result, the user equipment can monitor a multicast control channel (MCCH) for the scheduling of A1 to A4. It will be appreciated that since only one code and one set of encryption keys is necessary for the user equipment to operate, the amount of control signalling provided to the user can be reduced in comparison to a scenario in which four different sets of information (in the example shown: A1, A2, A3, A4) need to be communicated to a user in a user group.

In the example illustrated, the BM-SC may be operable to inform an MCE using M3 interface signalling of the A0 code being allocated to a group of services which are to be delivered to users within a user group. That information can be transmitted at the set-up stage where the UTRAN is prepared for MBMS transmissions or maybe communicated at the start of a session.

Once each service is allocated an appropriate TMGI (for example, A1 to A4 in the illustrated example), the network operates in accordance with legacy signalling in MBMS bearer set-up processes. Since the user group in relation to a given service is already known to the MCE (via knowledge of A0), the MCE may be operable to schedule multiplex services for a user group appropriately, when told of a TMGI A1 to A4 in relation to a given service.

It will be appreciated that aspects and embodiments described can be generalised as a means to provide group identity and indicate multiple services offered within a particular user group communication scenario.

Aspects and embodiments provide a method and procedure for providing information regarding multiple services belonging to a particular user group operating to perform group communication in accordance with MBMS procedures. Aspects and embodiments may provide group information to both users of a user group and the E-UTRAN and incur only a low signalling overhead. Aspects recognise that if a scheduler is aware of multiple services available within a user group, that scheduler may efficiently map multiple services to the same MBMS bearer and such an arrangement can result in improved user equipment power consumption. Aspects and embodiments can also be implemented such that they provide for dynamic allocation of TMGI for user group services.

Aspects can provide a mechanism for efficient signalling of identification of multiple services belonging to a user group, may enable dynamic allocation of TMGI for group services, may reduce signalling in relation to transmission of information to user equipment and/or the UTRAN and may improve power consumption, thereby allowing for efficient radio scheduling.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless communication network group communication method performed by a network node, said method comprising:
associating a set of identifiers, each identifier corresponding to a group service, with a user group such that identifiers which are members of said set form a subtree of a binary tree comprising all available identifiers;
communicating an indication, comprising a root node of said subtree, of said set of identifiers to a scheduler in said communication network;
determining a group service is to be transmitted to said user group; and
allocating one of said set of identifiers to said group service, such that multiple group services belonging to the same user group can be multiplexed on to the same logical channel.

2. A method according to any preceding claim, wherein each identifier comprises: a temporary mobile group identity (TMGI).

3. A method according to any preceding claim, comprising: communicating said allocation of an identifier to said group service to said scheduler.

4. A method according to any preceding claim, comprising: communicating operational parameters of said group service to said scheduler.

5. A wireless communication network node configured for group communication comprising:
group service association logic operable to associate a set of identifiers, each identifier corresponding to a group service, with a user group such that identifiers which are members of said set form a subtree of a binary tree comprising all available identifiers;
communication logic operable to communicate an indication, comprising a root node of said subtree, of said set of identifiers to a scheduler in said communication network;
determining a group service is to be transmitted to said user group; and
allocating one of said set of identifiers to said group service, such that multiple group services belonging to the same user group can be multiplexed on to the same logical channel.

6. A wireless communication network group communication scheduling method comprising:
receiving an indication of a set of identifiers, each identifier corresponding to a group service, said set of identifiers being associated with a user group, said indication comprising a root node of a subtree, and such that identifiers which are members of said set form a subtree of a binary tree comprising all available identifiers;
receiving an indication of a group service to be transmitted together with an identifier associated with said group service to be transmitted;
determining, based on the received associated identifier, that said group service that to be transmitted is a group service associated with said user group; and
allocating a group communication channel to said group service in dependence upon said user group, such that multiple group services belonging to the same user group are multiplexed on to the same logical channel.

7. A method according to claim 6, comprising: multiplexing a plurality of group services associated with said user group onto an MBMS radio bearer.

8. A method according to claim 6 or claim 7, comprising: receiving operational parameters of said group service.

9. A method according to claim 7, comprising: allocating said group communication channel in dependence upon operational parameters of said group service and said user group associated with said group service.

10. A scheduler configured for group communication in a wireless communication network, said scheduler comprising:
user group identification logic operable to receive an indication of a set of identifiers, each identifier corresponding to a group service, said set of identifiers being associated with a user group, said indication comprising a root node of a subtree and such that identifiers which are members of said set form a subtree of a binary tree comprising all available identifiers;
group service identification logic operable to receive an indication of a group service to be transmitted together with an identifier corresponding to said group service to be transmitted and, based on the received associated identifier, that said group service to be transmitted is a group service associated with said user group; and
allocation logic operable to allocate a group communication channel to said group service in dependence upon said associated user group, such that multiple group services belonging to the same user group are multiplexed on to the same logical channel.

11. A wireless communication network group communication method performed by user equipment comprising:
receiving an indication of a set of identifiers associated with a user group, each identifier corresponding to a group service such that identifiers which are members of said set form a subtree of a binary tree comprising all available identifiers, and said indication comprising a root node of said subtree;
deriving said identifiers in said set from said indication; and
monitoring a group communication control channel for the scheduling of group services being transmitted with any one of said identifiers associated with said user group such that multiple group services belonging to the same user group are multiplexed on to the same logical channel.

12. A wireless communication network user equipment configured for group communication comprising:
reception logic operable to receive an indication of a set of identifiers, each identifier corresponding to a group service, said set of identifiers being associated with a user group, said indication comprising a root node of a subtree, and such that identifiers which are members of said set form a subtree of a binary tree comprising all available identifiers;
group service identification logic operable to derive said identifiers in said set from said indication; and
monitoring logic operable to monitor a group communication control channel for the scheduling of group services being transmitted with any one of said identifiers associated with said user group such that multiple group services belonging to the same user group are multiplexed on to the same logical channel.

13. A computer program product operable, when executed on a computer, to perform the method of any one of claims 1 to 4; claims 6 to 9; claim 11.

## Patentansprüche

1. Verfahren für eine Gruppenkommunikation in einem drahtlosen Kommunikationsnetzwerk, das von einem Netzwerkknoten ausgeführt wird, wobei das Verfahren Folgendes umfasst:
Zuordnen einer Reihe von Identifikatoren, wobei jeder Identifikator einem Gruppendienst entspricht, zu einer Benutzergruppe, so dass Identifikatoren, die Elemente der besagten Reihe sind, einen Teilbaum eines Binärbaums bilden, der alle verfügbaren Identifikatoren umfasst;
Mitteilen einer Angabe, umfassend einen Wurzelknoten des besagten Teilbaums, von der besagten Reihe von Identifikatoren an einen Scheduler in dem besagten Kommunikationsnetzwerk;
Bestimmen eines an die besagte Benutzergruppe zu sendenden Gruppendienstes; und Zuweisen von einem aus der besagten Reihe von Identifikatoren an den besagten Gruppendienst, so dass mehrere Gruppendienste, die zu der gleichen Benutzergruppe gehören, auf dem gleichen logischen Kanal gemultiplext werden können.

2. Verfahren nach einem beliebigen vorstehenden Anspruch, wobei jeder Identifikator Folgendes umfasst: eine temporäre mobile Gruppenidentität (TMGI).

3. Verfahren nach einem beliebigen vorstehenden Anspruch, umfassend: Mitteilen der besagten Zuweisung eines Identifikators an besagten Gruppendienst an besagten Scheduler.

4. Verfahren nach einem beliebigen vorstehenden Anspruch, umfassend: Mitteilen von Betriebsparametern des besagten Gruppendienstes an besagten Scheduler.

5. Knoten eines drahtlosen Kommunikationsnetzwerks, der für eine Gruppenkommunikation ausgelegt ist, umfassend:
eine Gruppendienst-Zuordnungslogik, die betriebsfähig ist zum Zuordnen einer Reihe von Identifikatoren, wobei jeder Identifikator einem Gruppendienst entspricht, zu einer Benutzergruppe, so dass Identifikatoren, die Elemente der besagten Reihe sind, einen Teilbaum eines Binärbaums bilden, der alle verfügbaren Identifikatoren umfasst;
eine Kommunikationslogik, die betriebsfähig ist zum Mitteilen einer Angabe, umfassend einen Wurzelknoten des besagten Teilbaums, von der besagten Reihe von Identifikatoren an einen Scheduler in dem besagten Kommunikationsnetzwerk;
Bestimmen eines an die besagte Benutzergruppe zu sendenden Gruppendienstes; und Zuweisen von einem aus der besagten Reihe von Identifikatoren an den besagten Gruppendienst, so dass mehrere Gruppendienste, die zu der gleichen Benutzergruppe gehören, auf dem gleichen logischen Kanal gemultiplext werden können.

6. Verfahren zum Scheduling einer Gruppenkommunikation in einem drahtlosen Kommunikationsnetzwerk, umfassend:
Empfangen einer Angabe einer Reihe von Identifikatoren, wobei jeder Identifikator einem Gruppendienst entspricht, wobei besagte Reihe von Identifikatoren einer Benutzergruppe zugeordnet ist, wobei besagte Angabe einen Wurzelknoten eines Teilbaums umfasst, und so dass Identifikatoren, die Elemente der besagten Reihe sind, einen Teilbaum eines Binärbaums bilden, der alle verfügbaren Identifikatoren umfasst;
Empfangen einer Angabe eines Gruppendienstes, der zu senden ist, zusammen mit einem Identifikator, der dem besagten zu sendenden Gruppendienst zugeordnet ist;
Bestimmen, basierend auf dem empfangenen zugeordneten Identifikator, dass der besagte zu sendende Gruppendienst ein Gruppendienst ist, der der besagten Benutzergruppe zugeordnet ist; und
Zuweisen eines Gruppenkommunikationskanals an besagten Gruppendienst in Abhängigkeit von besagter Benutzergruppe, so dass mehrere Gruppendienste, die zu der gleichen Benutzergruppe gehören, auf dem gleichen logischen Kanal gemultiplext werden.

7. Verfahren nach Anspruch 6, umfassend: Multiplexen einer Vielzahl von Gruppendiensten, die besagter Benutzergruppe zugeordnet sind, auf einen MBMS-Funkträger.

8. Verfahren nach Anspruch 6 oder Anspruch 7, umfassend: Empfangen von Betriebsparametern des besagten Gruppendienstes.

9. Verfahren nach Anspruch 7, umfassend: Zuweisen des besagten Gruppenkommunikationskanals in Abhängigkeit von Betriebsparametern des besagten Gruppendienstes und der besagten Benutzergruppe, die besagtem Gruppendienst zugeordnet ist.

10. Scheduler, der ausgelegt ist für eine Gruppenkommunikation in einem drahtlosen Kommunikationsnetzwerk, wobei besagter Scheduler Folgendes umfasst:
eine Benutzergruppen-Identifikationslogik, die betriebsfähig ist zum Empfangen einer Angabe einer Reihe von Identifikatoren, wobei jeder Identifikator einem Gruppendienst entspricht, wobei besagte Reihe von Identifikatoren einer Benutzergruppe zugeordnet ist, wobei besagte Angabe einen Wurzelknoten eines Teilbaums umfasst, und so dass Identifikatoren, die Elemente der besagten Reihe sind, einen Teilbaum eines Binärbaums bilden, der alle verfügbaren Identifikatoren umfasst;
eine Gruppendienst-Identifikationslogik, die betriebsfähig ist zum Empfangen einer Angabe eines Gruppendienstes, der zu senden ist, zusammen mit einem Identifikator, der dem besagten zu sendenden Gruppendienst entspricht, und basierend auf dem empfangenen zugeordneten Identifikator, dass der besagte zu sendende Gruppendienst ein Gruppendienst ist, der der besagten Benutzergruppe zugeordnet ist; und
eine Zuweisungslogik, die betriebsfähig ist zum Zuweisen eines Gruppenkommunikationskanals an besagten Gruppendienst in Abhängigkeit von der besagten zugeordneten Benutzergruppe, so dass mehrere Gruppendienste, die zu der gleichen Benutzergruppe gehören, auf dem gleichen logischen Kanal gemultiplext werden.

11. Verfahren für eine Gruppenkommunikation in einem drahtlosen Kommunikationsnetzwerk, das von einem Teilnehmergerät ausgeführt wird, umfassend:
Empfangen einer Angabe einer Reihe von Identifikatoren, die einer Benutzergruppe zugeordnet sind, wobei jeder Identifikator einem Gruppendienst entspricht, so dass Identifikatoren, die Elemente der besagten Reihe sind, einen Teilbaum eines Binärbaums bilden, der alle verfügbaren Identifikatoren umfasst, und wobei besagte Angabe einen Wurzelknoten des besagten Teilbaums umfasst;
Ableiten der besagten Identifikatoren in besagter Reihe von besagter Angabe; und Überwachen eines Gruppenkommunikations-Kontrollkanals für das Scheduling von Gruppendiensten, die mit einem beliebigen der besagten Identifikatoren, die der besagten Benutzergruppe zugeordnet sind, gesendet werden, so dass mehrere Gruppendienste, die zu der gleichen Benutzergruppe gehören, auf dem gleichen logischen Kanal gemultiplext werden.

12. Teilnehmergerät eines drahtlosen Kommunikationsnetzwerks, das für eine Gruppenkommunikation ausgelegt ist, umfassend:
eine Empfangslogik, die betriebsfähig ist zum Empfangen einer Angabe einer Reihe von Identifikatoren, wobei jeder Identifikator einem Gruppendienst entspricht, wobei besagte Reihe von Identifikatoren einer Benutzergruppe zugeordnet ist, wobei besagte Angabe einen Wurzelknoten eines Teilbaums umfasst, und so dass Identifikatoren, die Elemente der besagten Reihe sind, einen Teilbaum eines Binärbaums bilden, der alle verfügbaren Identifikatoren umfasst;
eine Gruppendienst-Identifikationslogik, die betriebsfähig ist zum Ableiten der besagten Identifikatoren in besagter Reihe von besagter Angabe; und
eine Überwachungslogik, die betriebsfähig ist zum Überwachen eines Gruppenkommunikations-Kontrollkanals für das Scheduling von Gruppendiensten, die mit einem beliebigen der besagten Identifikatoren, die der besagten Benutzergruppe zugeordnet sind, gesendet werden, so dass mehrere Gruppendienste, die zu der gleichen Benutzergruppe gehören, auf dem gleichen logischen Kanal gemultiplext werden.

13. Computerprogrammprodukt, das betriebsfähig ist, um bei Ausführung auf einem Computer das Verfahren nach einem beliebigen der Ansprüche 1 bis 4; Ansprüche 6 bis 9; Anspruch 11 auszuführen.

## Revendications

1. Procédé de communication de groupe d'un réseau de communication sans fil exécuté par un noeud de réseau, ledit procédé comprenant les étapes suivantes :
associer un ensemble d'identifiants, chaque identifiant correspondant à un service de groupe, à un groupe d'utilisateurs de sorte que les identifiants qui sont des membres dudit ensemble forment une sous-arborescence d'un arbre binaire comprenant tous les identifiants disponibles ;
communiquer une indication, comprenant un noeud racine dudit ensemble d'identifiants, à un planificateur dans ledit réseau de communication ;
déterminer qu'un service de groupe doit être transmis audit groupe d'utilisateurs ; et
attribuer un identifiant parmi ledit ensemble d'identifiants audit service de groupe, de sorte que de multiples services de groupe appartenant au même groupe d'utilisateurs puissent être multiplexés sur le même canal logique.

2. Procédé selon l'une quelconque des revendications précédentes, dans lequel chaque identifiant comprend : une identité de groupe mobile temporaire (TMGI).

3. Procédé selon l'une quelconque des revendications précédentes, comprenant l'étape suivante : communiquer audit planificateur ladite attribution d'un identifiant audit service de groupe.

4. Procédé selon l'une quelconque des revendications précédentes, comprenant l'étape suivante : communiquer des paramètres opérationnels dudit service de groupe audit planificateur.

5. Noeud de réseau de communication sans fil configuré pour la communication de groupe comprenant :
une logique d'association de service de groupe permettant d'associer un ensemble d'identifiants, chaque identifiant correspondant à un service de groupe, à un groupe d'utilisateurs de sorte que les identifiants: qui sont des membres dudit ensemble forment une sous-arborescence d'un arbre binaire comprenant tous les identifiants disponibles ;
une logique de communication permettant de communiquer une indication, comprenant un noeud racine de ladite sous-arborescence, dudit ensemble d'identifiants à un planificateur dans ledit réseau de communication ;
déterminer qu'un service de groupe doit être transmis audit groupe d'utilisateurs ; et
attribuer un identifiant parmi ledit ensemble d'identifiants audit service de groupe, de sorte que de multiples services de groupe appartenant au même groupe d'utilisateurs puissent être multiplexés sur le même canal logique.

6. Procédé de planification de communication de groupe d'un réseau de communication sans fil comprenant les étapes suivantes :
recevoir une indication d'un ensemble d'identifiants, chaque identifiant correspondant à un service de groupe, ledit ensemble d'identifiants étant associé à un groupe d'utilisateurs, ladite indication comprenant un noeud racine d'une sous-arborescence, et de sorte que les identifiants qui sont des membres dudit ensemble forment une sous-arborescence d'un arbre binaire comprenant tous les identifiants disponibles ;
recevoir une indication d'un service de groupe devant être transmis avec un identifiant associé audit service de groupe devant être transmis ;
déterminer, en fonction de l'identifiant associé reçu, que ledit service de groupe devant être transmis est un service de groupe associé audit groupe d'utilisateurs ; et
attribuer un canal de communication de groupe audit service de groupe en fonction dudit groupe d'utilisateurs, de sorte que de multiples services de groupe appartenant au même groupe d'utilisateurs soient multiplexés sur le même canal logique.

7. Procédé selon la revendication 6, comprenant l'étape suivante : multiplexer une pluralité de services de groupe associés audit groupe d'utilisateurs sur un support MBMS.

8. Procédé selon la revendication 6 ou 7, comprenant l'étape suivante : recevoir des paramètres opérationnels dudit service de groupe.

9. Procédé selon la revendication 7, comprenant : attribuer ledit canal de communication de groupe en fonction des paramètres opérationnels dudit service de groupe et dudit groupe d'utilisateurs associé audit service de groupe.

10. Planificateur configuré pour la communication de groupe dans un réseau de communication sans fil, ledit planificateur comprenant :
une logique d'identification de groupe d'utilisateurs permettant de recevoir une indication d'un ensemble d'identifiants, chaque identifiant correspondant à un service de groupe, ledit ensemble d'identifiants étant associé à un groupe d'utilisateurs, ladite indication comprenant un noeud racine d'une sous-arborescence, et de sorte que les identifiants qui sont des membres dudit ensemble forment une sous-arborescence d'un arbre binaire comprenant tous les identifiants disponibles ;
une logique d'identification de service de groupe permettant de recevoir une indication d'un service de groupe devant être transmis avec un identifiant correspondant audit service de groupe devant être transmis et, en fonction de l'identifiant associé reçu, de sorte que ledit service de groupe devant être transmis est un service de groupe associé audit groupe d'utilisateurs ; et
une logique d'attribution permettant d'attribuer un canal de communication de groupe audit service de groupe en fonction dudit groupe d'utilisateurs associé, de sorte que de multiples services de groupe appartenant au même groupe d'utilisateurs soient multiplexés sur le même canal logique.

11. Procédé de communication de groupe d'un réseau de communication sans fil exécuté par un équipement utilisateur comprenant les étapes suivantes :
recevoir une indication d'un ensemble d'identifiants associé à un groupe d'utilisateurs, chaque identifiant correspondant à un service de groupe de sorte que les identifiants qui sont des membres dudit ensemble forment une sous-arborescence d'un arbre binaire comprenant tous les identifiants disponibles, et ladite indication comprenant un noeud racine de ladite sous-arborescence ;
dériver lesdits identifiants dans ledit ensemble à partir de ladite indication ; et
surveiller un canal de commande de communication de groupe pour la planification de services de groupe transmis avec l'un quelconque parmi lesdits identifiants associés audit groupe d'utilisateurs de sorte que les multiples services de groupe appartenant au même groupe d'utilisateurs soient multiplexés sur le même canal logique.

12. Équipement utilisateur d'un réseau de communication sans fil configuré pour la communication de groupe comprenant :
une logique de réception permettant de recevoir une indication d'un ensemble d'identifiants, chaque identifiant correspondant à un service de groupe, ledit ensemble d'identifiants étant associé à un groupe d'utilisateurs, ladite indication comprenant un noeud racine d'une sous-arborescence, et de sorte que les identifiants qui sont des membres dudit ensemble forment une sous-arborescence d'un arbre binaire comprenant tous les identifiants disponibles ;
une logique d'identification de service de groupe permettant de dériver lesdits identifiants dans ledit ensemble à partir de ladite indication ; et
une logique de surveillance permettant de surveiller un canal de commande de communication de groupe pour la planification de services de groupe transmis avec l'un quelconque parmi lesdits identifiants associés audit groupe d'utilisateurs de sorte que les multiples services de groupe appartenant au même groupe d'utilisateurs soient multiplexés sur le même canal logique.

13. Produit de programme informatique permettant, lorsqu'il est exécuté sur un ordinateur, d'exécuter le procédé selon l'une quelconque des revendications 1 à 4 ; 6 à 9 ; et 11.
